# FASCICULE DE BREVET EUROPEEN

(11) **EP 0 592 287 B1**
(45) Date de publication et mention de la délivrance du brevet: **07.05.1997**
(21) Numéro de dépôt: 93402401.9
(22) Date de dépôt: 01.10.1993
(51) Int. Cl.: G02B 6/38, G02B 6/42

(54) **Fiche encliquetable de connexion de fibre optique ayant un corps monobloc surmoulée**
Schnappverbinder für optische Fasern mit umgossenem Steckerkörper
Fiberoptical snap connector with overmoulded connector body

(30) Priorité: 09.10.1992 FR 9212015
(43) Date de publication de la demande: 13.04.1994
(73) Titulaire: FRAMATOME CONNECTORS INTERNATIONAL S.A., 92400 Courbevoie (FR)
(72) Inventeur: Debeaux, Alain, F-92290 Chatenay Malabry (FR); Ollivier, Jean-François, F-22230 Merdrignac (FR); Crosnier, Jean-Jacques, F-92260 Fontenay Aux Roses (FR)
(74) Mandataire: Keib, Gérard

(56) Documents cités:
- DE-A- 3 539 988
- DE-A- 4 115 462
- GB-A- 2 025 649
- US-A- 4 747 656
- US-A- 4 991 929
- US-A- 5 031 981
- US-A- 5 101 463

## Description

L'invention concerne une fiche de connexion de fibre optique, destinée à coopérer avec une embase, ou avec un autre élément de connexion femelle tel que par exemple un coupleur destiné à assurer la liaison entre deux fiches mises face à face.

L'embase pourra être aussi bien une embase passive, c'est-à-dire ne contenant que des éléments optiques, qu'une embase active, c'est-à-dire contenant un composant électrooptique, photoémetteur ou photorécepteur, servant à transformer le signal optique transmis par la fibre optique en un signal électrique, ou vice versa.

Généralement, ces fiches sont réalisées sous forme d'un ensemble composite formé de plusieurs pièces assemblées, avec un corps métallique démontable (pour permettre la mise en place de la fibre) et un système de verrouillage rapide du type baïonnette ou bague à quart-de-tour (pour permettre le verrouillage de la fiche sur l'embase, cette dernière étant en effet pourvue de tétons homologues servant à assurer ce verrouillage). En outre, il est nécessaire que la fibre soit maintenue axialement en pression contre l'élément avec lequel elle doit être couplée (par exemple contre la lentille du composant électrooptique) et la fiche comporte à cet effet un système à ressort incorporé permettant d'exercer cet effort de pression axiale permanente une fois la fiche mise en place et verrouillée sur l'embase.

Cette construction de la fiche en plusieurs pièces avec son système de montage de la fibre, son boîtier métallique, sa bague de verrouillage, son système à ressort, etc., si elle assure un excellent maintien de la fiche sur l'embase, est cependant complexe et donc, coûteuse à réaliser.

Elle convient très bien lorsque l'on a besoin de réaliser des connexions avec une très grande sécurité (appareils de mesure, dispositifs situé dans un environnement industriel par exemple) ou devant permettre de façon fiable un très grand nombre de manoeuvres de connexion/déconnexion.

Dans le cas des dispositifs de grande série, où le prix de revient unitaire de la connectique est un facteur essentiel, elle grève en revanche fortement les coûts, et devient même prohibitive pour de nombreuses applications où l'on souhaiterait disposer de fiches réalisables en grand nombre et à très bas prix.

Le brevet américain US-A-4 747 656 (Yoshinori Miyahara et al.) décrit un connecteur pour fibre optique, comprenant une fiche et une embase. L'embase est du type à gorge annulaire périphérique. La fiche comprend un dispositif de verrouillage comportant des bras munis d'ergots. Les ergots sont destinés à s'encliqueter dans la gorge circulaire précitée. Le dispositif ainsi constitué ne peut se déverrouiller en rotation, contrairement à un dispositif de verrouillage à baïonnette.

On connaît par ailleurs des dispositifs de verrouillage par rotation, constitués de goujons ou pions cylindriques symétriques et diamétralement opposés qui coopèrent avec une bague de verrouillage, libre en rotation sur une fiche et munie d'alvéoles de réception des goujons. De tels dispositifs sont divulgués, par exemple, par les demandes de brevet suivantes : DE-A-4 115 462 (Grote & Hartmann GmbH & Co), US-A-5 031 981 (Matthew A. Peterson) et US-A-4 991 929 (Thierry P. Bowen et al.).

Il s'agit de deux solutions alternatives, basées sur des principes différents, respectivement verrouillage par poussée et verrouillage par rotation, qui ne sont pas susceptibles d'être combinées.

L'un des buts de l'invention est de pallier les limitations des fiches de l'art antérieur, en proposant une fiche de connexion de fibre optique encliquetable sur une embase, qui puisse être réalisée en grande série et à très bas coût, très avantageusement sous la forme d'un élément monobloc en matière plastique surmoulé directement sur la terminaison de fibre à équiper.

A cet effet, la fiche de connexion de l'invention, qui est du type précité, c'est-à-dire destinée à coopérer avec une embase ou autre élément de connexion femelle comportant un logement tubulaire recevant la terminaison de fibre et pourvu de deux tétons périphériques, diamétralement opposés, coopérant avec des organes homologues de la fiche pour permettre l'encliquetage et le verrouillage de cette dernière sur l'embase, est définie dans la revendication 1.

De préférence, l'alvéole est ouvert latéralement dans une direction approximativement perpendiculaire au plan d'ensemble contenant le corps et les bras, de manière à permettre un déverrouillage de la fiche par déformation élastique déplaçant les flasques dans la direction précitée et essentiellement sans écartement radial relatif des bras par rapport au corps.

De préférence également, les bras présentent, par rapport à leur point de liaison au corps, une élasticité supérieure dans la direction d'un écartement radial dans ledit plan d'ensemble, que dans une direction perpendiculaire à ce plan.

Avantageusement, la déformation élastique des bras est telle que, après insertion et encliquetage de la fiche dans l'embase, ils exercent par réaction sur le corps central un effort axial maintenant en pression l'extrémité terminale de la fibre contre l'élément optique homologue de l'embase.

Très avantageusement, l'ensemble des parties constituant la fiche constitue un ensemble monobloc moulé, notamment un ensemble surmoulé directement sur la terminaison de fibre.

D'autres caractéristiques et avantages de l'invention apparaîtront à la lecture de la description détaillée ci-dessous, faite en référence aux dessins annexés.

Les figures 1 et 2 montrent, respectivement en perspective cavalière et en vue de dessus, en coupe, une embase dans laquelle est destinée à être insérée la fiche de l'invention, cette embase étant elle-même d'un type connu.

La figure 3 est une vue en plan, partiellement en coupe, de la fiche de l'invention et de la partie antérieure de l'embase dans laquelle elle vient se placer, prise selon la ligne III-III de la figure 4.

La figure 4 est une vue de côté de cette même fiche.

La figure 5 est une vue frontale, partiellement en coupe, prise selon la ligne V-V de cette même fiche.

La figure 6 représente un détail, vu selon VI-VI de la figure 5, de la face intérieure de l'un des flasques de la fiche.

La figure 7 est une coupe, prise selon VII-VII de la figure 3, du corps central de la fiche.

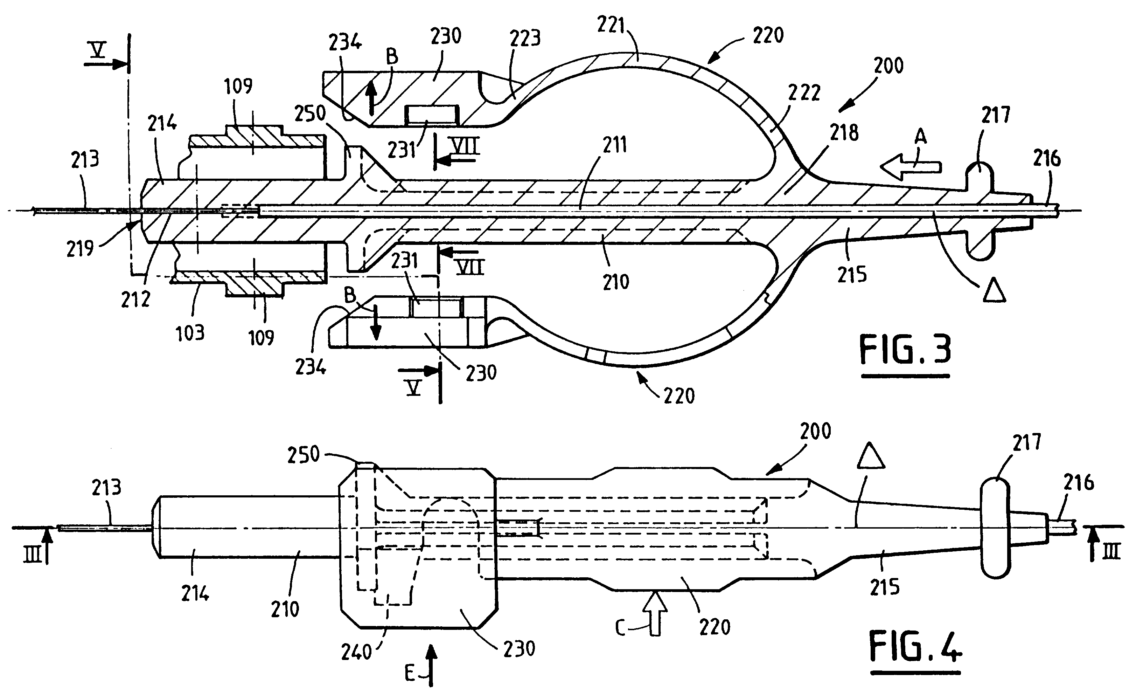

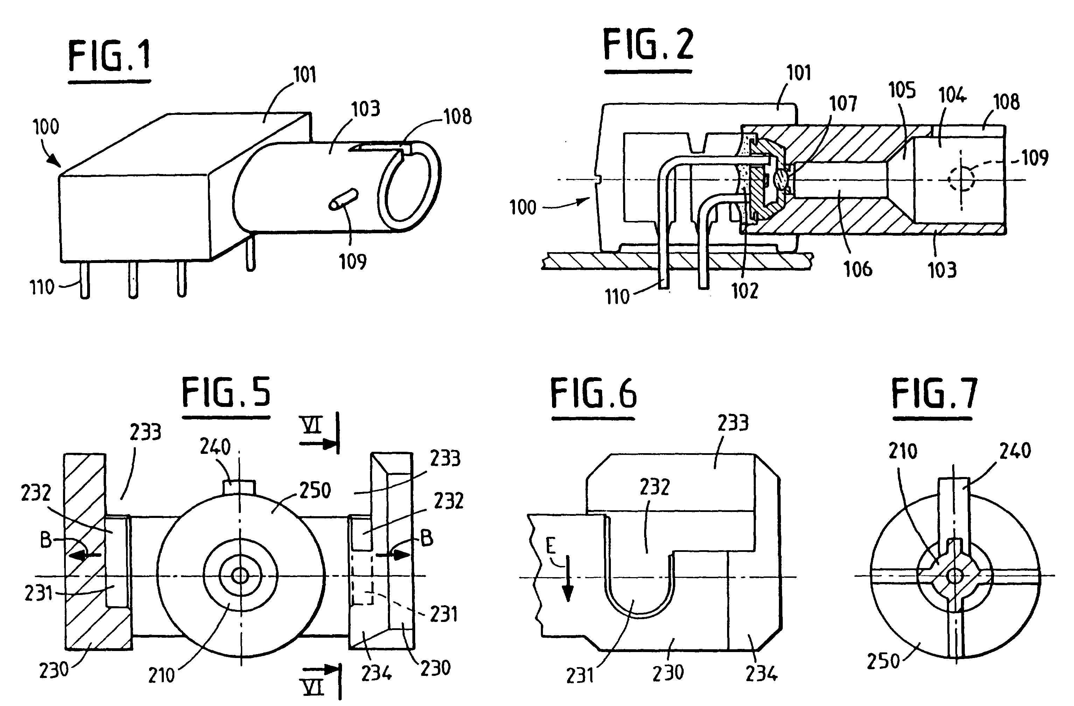

Sur la figure 1, on a représenté une embase active, qui est un exemple d'élément de connexion femelle avec lequel peut coopérer la fiche de l'invention.

Cette embase est par exemple conforme au standard industriel ST de la norme MIL-C-83522.Cette embase, référencée 100, se présente sous la forme d'un boîtier parallélépipédique 101 en matière plastique contenant un composant électro-optique 102, par exemple une diode laser ou une photodiode. L'ensemble comporte en partie avant, pour permettre la réception de la fibre optique, un tube 103, généralement métallique, de forme extérieure cylindrique définissant un logement intérieur 104, également cylindrique, se raccordant au composant électrooptique 102 par une partie en entonnoir 105 et un alésage 106 de diamètre 2,5 mm aboutissant à la face interne 107 de l'embase. L'alésage 106 est destiné à recevoir un élément de même section de la fiche assurant le guidage précis de la fibre. Cet élément sera guidé pour son introduction dans l'alésage 106 par l'entonnoir 105.

L'embase est en outre pourvue d'une rainure 108 empêchant toute rotation de la fiche lors de son introduction dans le tube 103, ainsi que de deux tétons 109 diamétralement opposés coopérant avec des organes homologues de la fiche.

Le plus souvent, ces embases sont pourvues de broches 110 permettant le soudage direct sur une carte de circuit imprimé, généralement sur une partie de bord de celle-ci afin de permettre une insertion et un retrait plus aisé des fiches. Cependant, il est fréquent que, dans cette configuration, plusieurs embases soient juxtaposées l'une contre l'autre et que l'on se trouve ainsi en présence, au bord de la carte de circuit imprimé, d'une batterie de prises femelles très rapprochées, dont l'accès peut être délicat en raison de la présence des embases voisines. On verra plus loin que la fiche de l'invention permet une connexion/déconnexion très aisée même dans ces situations d'accès difficile.

Jusqu'à présent, on utilisait généralement une fiche de structure assez complexe, avec un système à baïonnette ou bague de verrouillage comportant une gorge en forme de came recevant les tétons 109.

Les figures 3 à 7 montrent la fiche selon l'invention.

Sur la figure 3, on a représenté en outre l'entrée du tube 103 de l'embase, dans une position intermédiaire où la fiche est présentée devant l'embase et légèrement introduite dans cette dernière, avant le début de la phase d'insertion finale et de verrouillage.

Cette fiche, désignée par la référence générale 200, comporte essentiellement un corps central allongé 210 et deux bras latéraux 220, dont la position générale forme avec le corps 210 un plan commun, que l'on appellera par la suite (plan contenant le corps et les bras ainsi que l'axe Δ de la fibre, correspondant au plan de coupe de la figure 3). Ces bras sont terminés chacun par un flasque respectif 230 destiné à réaliser l'encliquetage avec les tétons 109 de l'embase de la manière que l'on expliquera plus loin.

Plus précisément, le corps 210 a une forme générale sensiblement cylindrique et loge la terminaison de fibre comprenant, en 211, la fibre revêtue de sa gaine et, en 212, la fibre nue proprement dite. La partie de fibre émergente repérée 213 est coupée après surmoulage de la fiche, la face 219 de la fiche est ensuite polie, et l'embout 214 guidé par l'entonnoir 105 vient se centrer précisément dans l'alésage 106 de l'embase (figure 2) jusqu'à mise en appui de la face 219 sur la face interne 107 de l'embase, assurant le positionnement correct de la fibre face à la lentille du composant électrooptique.

Par la suite, on appellera ou , la région 214 du corps central, et donc de la fiche, devant être insérée dans l'embase et ou la région 215 située à l'opposé, du côté du cordon 216 de la fibre à raccorder.

Un relief périphérique 217 peut être prévu au moulage pour faciliter les opérations d'insertion et de retrait de la fiche (dans le sens de la flèche A ou dans le sens inverse), celle-ci étant de dimensions très réduites.

Il est en outre prévu sur le corps central un élément de guidage 240 coopérant avec l'encoche 108 de l'embase, destinée à réaliser le positionnement angulaire précis de la fiche dans l'embase (notamment pour que les flasques viennent se placer dans la direction des tétons) et empêcher toute rotation ultérieure de la fiche.

Enfin, le corps central porte un élément en forme de disque 250 dont le diamètre extérieur est ajusté au diamètre intérieur du cylindre 103 de l'embase. Cet élément est destiné à opérer un guidage précis de la fiche dans le cylindre de l'embase lors de son insertion dans celui-ci.

De façon caractéristique de l'invention, sur le corps central sont montés deux bras élastiquement déformables 220 qui présentent, sur la majeure partie 221 de leur longueur, une forme aplatie, de section par exemple rectangulaire allongée, dont la largeur (qui correspond au plan de coupe de la figure 3) est située dans le même plan que le corps central (plan d'ensemble), et dont la plus grande longueur (visible en projection figure 4 sur la plan de la figure), est perpendiculaire à ce même plan.

De plus, outre leur forme aplatie, les bras sont courbés comme illustré figure 3, c'est-à-dire avec leur rayon de courbure contenu dans le plan d'ensemble et leur concavité tournée vers le corps. On verra par la suite que cette conformation permet d'accroître l'élasticité des bras en direction axiale, c'est-à-dire dans le sens d'un effort tendant à rapprocher les deux extrémités 222 et 223 des bras.

Chacun des bras est fixé par l'une de ses extrémités, référencée 222, à une région 218 du corps central situé dans la moitié postérieure de celui-ci, cette zone de liaison réalisant un effet de charnière élastique entre le corps 210 et le bras 220 ; ce dernier peut ainsi s'écarter radialement du corps sous l'effet d'une sollicitation extérieure appliquée selon la flèche B.

L'autre extrémité 223 des bras, c'est-à-dire leur extrémité libre, est pourvue d'un flasque 230 (visible plus en détail, de face sur la figure 5, et de côté sur la figure 6). Chacun de ces flasques est constitué d'un élément aplati de contour approximativement carré, essentiellement non déformable, s'étendant dans un plan perpendiculaire au plan d'ensemble et parallèle à l'axe principal Δ de la fiche et de la fibre.

Les deux flasques sont distants l'un de l'autre (distance entre leurs faces intérieures en vis-à-vis) d'un écartement correspondant sensiblement au diamètre du cylindre 103 de l'embase, ou légèrement inférieur, ces flasques étant destinés à se plaquer contre ce cylindre et coiffer, par leurs alvéoles 231, les tétons 109 après insertion complète de la fiche dans l'embase.

Plus précisément, pour coopérer avec le téton respectif 109 de l'embase, chacun de ces flasques comporte sur sa face tournée vers le corps central un alvéole 231 ayant, au moins en partie, une section homologue de celle des tétons 109 (c'est-à-dire, par exemple, peut présenter une section au moins en partie circulaire, comme on peut le voir sur la figure 6).

L'alvéole est cependant ouvert latéralement vers le bas en 232 (figure 6), cette ouverture débouchant sur une partie ouverte 233. Cette configuration a pour objet de ménager une possibilité de dégagement du téton 109 par déplacement vers le bas des flasques (flèche E), sans écartement radial de ceux-ci, c'est-à-dire sans déplacement dans le sens de la flèche B ; on expliquera plus loin la manière dont ces déplacements sont réalisés lors des manoeuvres de connexion/déconnexion.

On notera en outre que chacun des flasques comporte en partie frontale une face biseautée 234, visible notamment figure 3, jouant le rôle de rampe et servant à provoquer l'écartement des flasques (flèche B) lors de la venue en contact des flasques avec les tétons 109 pendant l'enfoncement de la fiche dans l'embase.

L'ensemble de la fiche est avantageusement réalisé sous forme monobloc en une matière plastique présentant à la fois de bonnes caractéristiques de résilience et pouvant être moulée avec une bonne précision dimensionnelle (faible retrait). On peut par exemple choisir une matière plastique telle que le PBT (polytéréphtalate de butylène).

On notera qu'une telle fiche est généralement de dimensions très réduites, typiquement d'une longueur maximale de 35 mm pour une largeur maximale hors-tout de 12,7 mm, le diamètre du corps étant, dans sa partie centrale, de l'ordre de 3 mm.

Très avantageusement, la fiche est en outre réalisée directement par surmoulage sur la fibre, en une seule et même étape de fabrication. Des trous de maintien lors du surmoulage de la fibre (non illustrés) peuvent être alors prévus pour que les opérations de surmoulage puissent être réalisées avec la plus grande précision voulue.

On va maintenant décrire la mise en oeuvre de cette fiche.

L'opération de connexion se fait de la façon la plus simple, par simple insertion de la zone antérieure 214 dans le cylindre 103 de l'embase et exercice d'une poussée axiale A. La fiche peut alors pénétrer dans l'embase où elle sera guidée axialement par le disque 250 ; lorsque les faces 234 des flasques viendront en contact avec les tétons 109, les flasques vont s'écarter du corps (flèche B) jusqu'au moment où, les alvéoles 231 se trouvant en vis-à-vis des tétons 109, les flasques reprendront alors leur position initiale du fait de l'élasticité propre des bras 220 tentant à ramener ceux-ci en rapprochement du corps central. La fiche est alors verrouillée sur l'embase.

On notera que, dans cette position verrouillée finale, la forme arquée des bras permet à ceux-ci d'exercer sur le corps un léger effort de pression axiale, qui permet précisément d'assurer le contact optique optimal entre l'extrémité 219 de la fiche et la lentille 107 du composant électrooptique, fonction qui était jusqu'à présent dévolue à un ressort distinct dans les fiches de connexion de l'art antérieur ; comme on peut le voir, dans le cas de la présente invention il n'est nécessaire d'ajouter aucune pièce spécifique, cette fonction étant assurée par le choix de la forme même des bras 220.

La déconnexion peut être opérée de deux manières différentes.

La première consiste, simplement, à écarter les deux flasques 250 afin de dégager les tétons 109 et retirer la fiche par une traction dans le sens inverse de la flèche A (l'écartement des flasques se fait dans le sens des flèches B).

L'autre manière consiste, au lieu d'agir directement sur les flasques et de les écarter, à les abaisser en les déplaçant parallèlement à leur propre plan (flèche E) et sans les écarter radialement du corps (c'est-à-dire sans déplacement dans le sens des flèches B). Ce mouvement peut être imprimé en exerçant une poussée sur les parties centrales des bras (flèche C de la figure 4) afin d'abaisser les flasques situés aux extrémités de ces bras.

Les tétons 109 vont se trouver dégagés latéralement, par les ouvertures 232, des alvéoles respectifs 231 et, une fois arrivés dans la région ouverte 233, la fiche pourra être retirée sans difficulté par traction vers l'arrière.

Comme on peut le voir, les manoeuvres de connexion peuvent être réalisées en ne manipulant que la partie postérieure de la fiche, et les manoeuvres de déconnexion peuvent être réalisées par simple appui vertical sur la partie antérieure puis manipulation de la partie postérieure. Ceci est particulièrement avantageux dans le cas où l'on se trouve en présence d'un nombre important d'embases juxtaposées, et, en outre, fixées contre une carte de circuit imprimé. Cette dernière configuration ne laisse en effet que très peu de marge de manoeuvre pour les manipulations des fiches, compte tenu notamment de leur très petites dimensions.

## Revendications

1. Une fiche (200) de connexion de fibre optique (211, 212), destinée à coopérer avec une embase (100) ou autre élément de connexion femelle comportant un logement tubulaire (103) recevant la terminaison de fibre et pourvu de deux tétons (109) périphériques, diamétralement opposés et en forme de pions cylindriques, destinés à recevoir des organes de verrouillage complémentaires de la fiche (200), ladite fiche (200) comprenant un corps central allongé (210), logeant la terminaison de fibre (211, 212), avec une région cylindrique (250) dont la section extérieure est homologue de la section intérieure du logement tubulaire (103) de l'embase (100), lesdits organes complémentaires comportant des alvéoles (231) de section au moins partiellement homologue de la section extérieure des tétons (109) en forme de pions cylindriques respectifs de l'embase pour permettre l'encliquetage et le verrouillage de la fiche (200) sur l'embase (100) à l'aide des tétons reçus dans les alvéoles,
fiche (200) caractérisée en ce que le corps central allongé (210) présente en outre deux bras (220) élastiquement déformables, reliés chacun par l'une (222) de leurs extrémités à une région postérieure (218) du corps central (210) et sensiblement parallèlement à l'axe (Δ) général de celui-ci, l'extrémité libre (223) de chaque bras (220) portant chacune un flasque (230) pourvu, sur sa face tournée vers le corps central (210) d'un desdits alvéoles (231), les bras (220) et le corps central (210) constituant un ensemble monobloc moulé.

2. La fiche de la revendication 1, dans laquelle l'alvéole (231) est ouvert latéralement (232, 233) dans une direction approximativement perpendiculaire au plan d'ensemble contenant le corps et les bras, de manière à permettre un déverrouillage de la fiche par déformation élastique déplaçant les flasques dans la direction précitée et essentiellement sans écartement radial relatif des bras par rapport au corps.

3. La fiche de la revendication 2, dans laquelle les bras présentent, par rapport à leur point de liaison au corps, une élasticité supérieure dans la direction d'un écartement radial dans ledit plan d'ensemble, que dans une direction perpendiculaire à ce plan.

4. La fiche de la revendication 1, dans laquelle la déformation élastique des bras est telle que, après insertion et encliquetage de la fiche dans l'embase, ils exercent par réaction sur le corps central un effort axial maintenant en pression l'extrémité terminale de la fibre (213) contre un élément optique homologue (107) de l'embase.

5. La fiche de la revendication 4 dans laquelle les bras (220) ont une forme arquée permettant d'exercer ledit effort axial.

6. La fiche de la revendication 1, dans laquelle l'ensemble monobloc est surmoulé sur la terminaison de fibre.

## Patentansprüche

1. Verbinder (200) für eine optische Faser (211, 212), der vorgesehen ist, um mit einem Sockel (100) oder einem anderen weiblichen Verbinderelement zusammenzuwirken, das eine rohrförmige Aussparung (103) aufweist, welche den Abschluß der Faser aufnimmt, und das mit zwei peripheren, diametral gegenüberliegenden zylinderstiftförmigen Zapfen (109) versehen ist, wobei die Stifte vorgesehen sind, um komplementäre Verriegelungselemente des Verbinders (200) aufzunehmen, wobei der Verbinder (200) einen langgestreckten Zentralkörper (210) aufweist, in dem der Abschluß der Faser (211, 212) untergebracht ist, mit einem zylindrischen Bereich (250), dessen äußerer Querschnitt homolog zum inneren Querschnitt der rohrförmigen Aussparung (103) des Sockels (100) ist, wobei die komplementären Elemente Ausnehmungen (231) aufweisen, deren Querschnitt wenigstens teilweise dem Außenquerschnitt der entsprechenden zylinderstiftförmigen Zapfen (109) des Sockels homolog ist, um die Einrastung und Verriegelung des Verbinders (200) an dem Sockel (100) mit Hilfe der in den Ausnehmungen aufgenommenen Zapfen zu ermöglichen,
**dadurch gekennzeichnet, daß**
der langgestreckte Zentralkörper (210) ferner zwei elastisch verformbare Arme (220) aufweist, die jeweils an einem (222) ihrer Enden mit einem hinteren Bereich (218) des Zentralkörpers (210) verbunden und im wesentlichen parallel zu dessen allgemeiner Achse (Δ) sind, wobei das freie Ende (223) eines jeden Arms (220) einen Flansch (230) trägt, der an seiner dem Zentralkörper (210) zugewandten Seite mit einer der Ausnehmungen (231) versehen ist, wobei die Arme (220) und der Zentralkörper (210) eine einteilig geformte Anordnung bilden.

2. Verbinder nach Anspruch 1, bei dem die Ausnehmung (231) seitlich (232, 233) in einer Richtung offen ist, die in etwa senkrecht zur Anordnungsebene verläuft, die den Körper und die Arme enthält, um eine Entriegelung des Verbinders durch eine elastische Verformung zu ermöglichen, bei der die Flansche in die vorgenannte Richtung bewegt werden, im wesentlichen ohne daß die Arme radial vom Körper fortbewegt werden.

3. Verbinder nach Anspruch 2, bei dem die Arme bezogen auf ihren Verbindungspunkt mit dem Körper eine höhere Elastizität in Richtung einer radialen Auseinanderbewegung in der Anordnungsebene als in einer Richtung senkrecht zu dieser Ebene haben.

4. Verbinder nach Anspruch 1, bei dem die elastische Verformung der Arme derart ist, daß sie nach Einführen und Einrasten des Verbinders in den Sockel durch Reaktion auf den Zentralkörper eine axiale Kraft ausüben, die das Abschlußende der Faser (213) gegen ein homologes optisches Element (107) gedrückt hält.

5. Verbinder nach Anspruch 4, bei dem die Arme (220) eine gebogene Form haben, die es ermöglicht, die axiale Kraft auszuüben.

6. Verbinder nach Anspruch 1, bei dem der Faserabschluß mit der einteiligen Anordnung umgossen ist.

## Claims

1. Fibre-optic (211, 212) plug connector (200), intended to interact with a mating connector (100) or other female connection element comprising a tubular housing (103) receiving the fibre termination and provided with two diametrically opposite peripheral studs (109), in the form of cylindrical pins, which are intended to receive locking means complementary to the plug (200), the said plug (200) comprising an elongate central body (210) accommodating the fibre termination (211, 212) with a cylindrical region (250) whose external section corresponds with the internal section of the tubular housing (103) of the mating connector (100), the said complementary members including cavities (231) of cross-section at least partially corresponding with the external section of the respective studs (109), in the form of cylindrical pins, of the base in order to allow engaging and locking of the plug (200) onto the mating connector (100) with the aid of the studs received in the cavities, which plug (200) is characterized in that the elongate central body (210) furthermore has two elastically deformable arms (220), each connected by one (222) of their ends to a rear region (218) of the central body (210) and substantially parallel to the general axis (Δ) of the latter, the free end (223) of each arm (220) each carrying a flange (230) provided, on its face turned towards the centra. body (210), with one of the said cavities (231), the arms (220) and the central body (210) constituting a moulded monobloc unit.

2. The plug of Claim 1, in which the cavity (231) is open laterally (232, 233) in a direction approximately perpendicular to the overall plane containing the body and the arms, so as to allow unlocking of the plug by elastic deformation moving the flanges in the aforementioned direction and essentially without relative radial separation of the arms with respect to the body.

3. The plug of Claim 2, in which the arms have, with respect to their point of junction to the body, a greater elasticity in the direction of a radial separation in the said overall plane than in a direction perpendicular to this plane.

4. The plug of Claim 1, in which the elastic deformation of the arms is such that, after insertion and engaging of the plug in the mating connector, they exert by reaction on the central body an axial force holding the terminal end of the fibre (213) in pressure against a corresponding optical element (107) of the mating connector.

5. The plug of Claim 4, in which the arms (220) have an arced shape making it possible to exert the said axial force.

6. The plug of Claim 1, in which the monobloc unit is moulded over the fibre termination.
